Europäisches Patentamt

European Patent Office

Office européen des brevets

(11) Veröffentlichungsnummer: **0 394 539**
**A1**

## EUROPÄISCHE PATENTANMELDUNG

(21) Anmeldenummer: **89107816.4**

(22) Anmeldetag: **28.04.89**

(51) Int. Cl.5: **G11B 5/48**

(43) Veröffentlichungstag der Anmeldung:
**31.10.90 Patentblatt 90/44**

(84) Benannte Vertragsstaaten:
**AT CH DE FR GB IT LI NL**

(71) Anmelder: **Siemens Aktiengesellschaft**

Wittelsbacherplatz 2
D-8000 München 2(DE)

(72) Erfinder: **Moser, Erich**
**Dorfstrasse 8**
**D-8028 Taufkirchen(DE)**

(54) Temperaturunempfindliche spielfreie Lageranordnung für eine drehbewegliche Baueinheit.

(57) In der Lageranordnung ist eine drehbewegliche Baueinheit (z. B. 2) mit ersten Materialeigenschaften mit einer feststehenden Baueinheit (1) mit zweiten Materialeigenschaften unter Verwendung von mindestens einem Wälzlager (11, 13, 15 bzw. 12, 14, 16) gepaart. Das Wälzlager ist mit Preßsitz in derjenigen Baueinheit (1) festgelegt, deren Wärmeausdehnungskoeffizient dem des Wälzlagers am nächsten kommt. Zwischen dem Wälzlager und der anderen Baueinheit (2) ist mindestens ein die beiden Baueinheiten spielfrei zueinander zentrierendes Distanzelement (19 bzw. 20) angeordnet, dessen hohe Wärmedehnung die unterschiedlichen Wärmedehnungen der beiden Baueinheiten kompensiert.

# FIG 3

EP 0 394 539 A1

## Temperaturunempfindliche spielfreie Lageranordnung für eine drehbewegliche Baueinheit

Die Erfindung bezieht sich auf eine Lageranordnung zum spielfreien Lagern einer drehbeweglichen Baueinheit mit ersten Materialeigenschaften in bezug auf eine feststehende Baueinheit mit zweiten Materialeigenschaften gemäß dem Oberbegriff des Patentanspruches 1.

Insbesondere aus der Feinmechanik ist eine Vielzahl von Anwendungsfällen bekannt, bei denen es darauf ankommt, bestimmte Funktionseigenschaften, insbesondere die Spielfreiheit bei einer Lageranordnung für drehbewegliche Bauteile bei der Montage einmal einzustellen und dann den eingestellten Zustand über die gesamte Betriebszeit aufrechtzuerhalten. Kritisch ist dabei insbesondere der Temperaturgang der Lageranordnung, d. h. der Einfluß von Wärmedehnungen auf die Lagerpaarung bei Betriebstemperaturen, die sich wesentlich von der Temperatur bei der Montage unterscheiden.

Ein bekanntes Beispiel für einen dieser besonderen Anwendungsfälle in der Feinmechanik ist die Lagerung eines Drehpositionierers für einen Magnetplattenspeicher. In Magnetplattenspeichern sind Drehpositionierer mit einer feststehenden Achse auf einem Lagerbock seitlich neben einem Magnetplattenstapel angeordnet. Die Achse trägt ein Schwenkstück, von dem einerseits ein Paar von Haltearmen radial absteht, an dem eine Magnetantriebsspule festgelegt ist. Diesen Haltearmen gegenüberliegend stehen von dem Schwenkstück eine Mehrzahl von Tragarmen in radialer Richtung ab, an denen Magnetkopfsysteme federnd angelenkt sind.

Wegen der heute erzielten hohen Speicherdichten ist die gegenseitige Position der Magnetkopfsysteme äußerst kritisch. Die relative Lagezuordnung der Magnetkopfsysteme darf sich auch bei Temperaturgängen nicht verändern, da sonst Fehler beim Aufzeichnen bzw. Lesen von Daten auftreten können. Eine für den Konstrukteur wenigstens teilweise gegenläufige Forderung liegt bei diesem Anwendungsfall darin begründet, daß mit diesen Positioniereinrichtungen kurze Zugriffszeiten beispielsweise in einer Größenordnung von deutlich unter 20 ms möglich sein sollen. Dies läßt sich nur erreichen, wenn der konstruktive Aufbau für die bewegten Teile möglichst massearm ausgeführt wird. Auch bei bereits bekannten Drehpositionierern werden daher für das Schwenkstück bereits Leichtmetalle aus Aluminium- oder Magnesiumlegierungen verwendet.

Andererseits wird für die Lagerung des Schwenkstückes auf der feststehenden Achse hohe Präzision gefordert, dies gilt sowohl hinsichtlich der Spielfreiheit der Lagerung als auch ihrer Leichtgängigkeit. Das Schwenkstück des Drehpositionierers wird deshalb üblicherweise mit Stahlkugellagern zweifach auf der feststehenden Achse gelagert.

Eine derartige Ausführungsform für einen Drehpositionierer mit einem einteiligen Schwenkstück mit integrierten Halte- bzw. Tragarmen sowie einer zweifachen Lagerung auf einer feststehenden Achse mit Hilfe von Stahlkugellagern ist beispielsweise aus US-A-4,689,703 bekannt. Bei dem bekannten Drehpositionierer wird eine hohe Torsionsfestigkeit der Positionierarme durch diesen einteiligen Aufbau auch dann erreicht, wenn dafür Leichtmetallegierungen eingesetzt werden. Dennoch hat die bekannte Lösung den Nachteil, daß die Lageranordnung temperaturempfindlich ist. Das ist darauf zurückzuführen, daß sich bei Temperaturänderungen im Betriebszustand aufgrund der unterschiedlichen Wärmeausdehnungskoeffizienten der Paarungen von Lagerelementen Spannungen sowohl in axialer als auch in radialer Richtung in der Lagereinheit ergeben. Wenn dann das Schwenkstück aus den genannten Gründen massearm ausgeführt ist, können sich die Tragarme des kammartig ausgebildeten Schwenkstückes in ihrer Position zueinander verschieben, was die Ursache von Funktionsfehlern sein kann.

Weiterhin wird bei konventionellen Drehpositionierern versucht, die Präzision der Lagerung beispielsweise dadurch zu gewährleisten, daß die Außenringe der Kugellager in der Lagerbohrung des Schwenkstückes verklebt werden. Bei den genannten Paarungen unterschiedlicher Materialien wirken sich unterschiedliche Maßänderungen aufgrund des Temperaturganges radial voll auf den dünnen Klebespalt aus. Mit der Zeit wird dadurch der Klebstoff überbeansprucht.

Ein weiteres Beispiel für einen wegen des Temperaturganges kritischen Anwendungsfall liegt auf demselben Fachgebiet und betrifft die Lageranordnung für den Plattenstapel eines Magnetplattenspeichers. Die hohe Spurdichte bei modernen Magnetplattenspeichern, insbesondere bei 5 1/4"- bzw. 3 1/2"-Festplattenspeichern, erfordert eine exakt koaxiale und möglichst schwingungsfreie Lagerung der Spindel des Plattenstapels. Häufig ist deshalb die Spindel in einem den Plattenstapel und den benachbart angeordneten Positionierer umschließenden, starren Gehäuse beidseitig gelagert. Bei einer Gruppe von Festplattenspeichern wird diese Lagerung durch die Kombination eines Fest- und eines Loslagers gebildet, wobei die beiden Lager z. B. durch eine Feder gegeneinander verspannt werden.

Aus US-A-4,703,374 und auch US-A-4,780,777 ist dazu weiterhin bekannt, eine spielfreie Lagerung der Spindel des Plattenstapels mit Hilfe von zwei Festlagern zu gestalten und das Lagerspiel in den Wälzlagern durch ein Spannelement auszuschalten, das in diesem Fall eine Membranfeder, aber beispielsweise auch ein federnd ausgebildetes Wandteil des Plattenspeichergehäuses sein kann.

Mit dieser bekannten Lösung ist es zwar möglich, die Spielfreiheit der Spindellagerung bei der Montage einmal einzustellen. Kritisch bleibt dennoch das Verhalten dieser Federelemente im Betriebszustand. Denn die Auswirkung dieser Federelemente auf die Lagegenauigkeit und das Schwingungsverhalten der Lageranordnung ist nicht exakt vorher bestimmbar. Die bisher bekannten Lösungen können daher nicht in vollem Umfang befriedigen.

Der vorliegenden Erfindung liegt daher die Aufgabe zugrunde, eine Lageranordnung der eingangs genannten Art zu schaffen, mit der Baueinheiten mit erheblich voneinander abweichenden Materialeigenschaften miteinander gepaart werden können, ohne daß ein entsprechender Temperaturgang einen nennenswerten Einfluß auf die Präzision der Lagerung, d. h. Spielfreiheit in radialer als auch axialer Richtung bei hoher Leichtgängigkeit hat.

Bei einer Lageranordnung der eingangs genannten Art wird diese Aufgabe erfindungsgemäß durch die im Kennzeichen des Patentanspruches 1 beschriebenen Merkmale gelöst.

Das Konstruktionsprinzip der erfindungsgemäßen Lösung besteht darin, alle Elemente der Lageranordnung, die einen im wesentlichen übereinstimmenden Ausdehnungskoeffizienten besitzen, jeweils zu Baueinheiten zusammenzufassen, die in sich formstabil sind. Die Baueinheiten mit unterschiedlichen Wärmedehnungskoeffizienten werden in der Lageranordnung räumlich exakt voneinander getrennt, d. h. sowohl radial als auch axial in einem gewissen Abstand voneinander angeordnet. In dem so gebildeten Zwischenraum zwischen den räumlich voneinander getrennten Baueinheiten werden zentrierende Distanzelemente angeordnet, die aus einem Werkstoff mit einem hohen Ausdehnungskoeffizienten bestehen. In Kenntnis der Ausdehnungskoeffizienten der verschiedenen verwendeten Materialien lassen sich die funktionell wesentlichen Maße für den Zwischenraum bzw. die Distanzelemente in radialer als auch axialer Richtung rechnerisch derart festlegen, daß die Maßänderungen der Distanzelemente in radialer als auch axialer Richtung bei allen Temperaturveränderungen der Gesamtanordnung der Differenz der Maßänderung der über sie verbundenen Baueinheiten entsprechen. In der Lageranordnung können daher hohe Temperaturspannungen weder bei positiven noch negativen Temperaturveränderungen auftreten.

Im Vergleich zu manchen konstruktiv sehr aufwendigen und dennoch nicht völlig befriedigenden Lösungen für derartig hoch präzise Lageranordnungen ist die erfindungsgemäße Lösung unter anderem auch deshalb so vorteilhaft, da sie dieses Temperaturproblem mit konstruktiv einfachen Mitteln löst. Die Distanzteile lassen sich mit dem gewünschten großen Ausdehnungskoeffizienten vorzugsweise aus einem Kunststoff herstellen. Mit bekannten Kunststoffspritzverfahren sind die Distanzteile mit hoher Genauigkeit und dennoch billig als Massenartikel herstellbar.

Es wird nicht übersehen, daß trotz dieser Werkstoffpaarungen an den Grenzflächen zwischen den Distanzelementen und den durch sie räumlich getrennten Baueinheiten gewisse lokale Spannungen, systematisch bedingt, auftreten. Der Einfluß dieser lokalen Spannungen läßt sich aber herabsetzen, wie Weiterbildungen der Erfindung zeigen, indem man die Distanzelemente zwar als einen in sich geschlossenen Körper ausbildet, ihn dann aber möglichst flexibel ausgestaltet. Dies kann beispielsweise gemäß einer der Weiterbildungen der Erfindung dadurch erreicht werden, daß in die Stirnseiten der Distanzelemente eine Mehrzahl von regelmäßig angeordneten, in radialer Richtung verlaufenden Schlitzen eingelassen ist. Durch dieses Schlitzen der Distanzelemente entstehen einzelne sektorförmige Teilstücke, die untereinander lediglich durch schmale Stege verbunden sind. Damit lassen sich die Distanzelemente als ein Teil zwar einfach montieren und erfüllen auch ihre zentrierende Funktion, funktionell aber wirken die Teilstücke im Hinblick auf möglichen Spannungsausgleich nahezu wie einzelne Elemente.

Dieser Effekt läßt sich weiter verbessern, wie andere Weiterbildungen der Erfindung zeigen, indem man die Berührungsflächen der Distanzelemente mit den Baueinheiten möglichst weitgehend reduziert, indem man beispielsweise in die Umfangsflächen der Distanzelemente in axialer Richtung laufende Nuten einläßt. Statt derartiger Nuten können aber auch anders geformte Aussparungen in den Berührungsflächen in einer regelmäßigen Anordnung vorgesehen werden. Der Zweck dieser Aussparungen ist, daß lediglich schmale Stege bzw. Gitter als Berührungsbereiche der Distanzelemente zu den Baueinheiten stehenbleiben. Auf diese Weise läßt sich erreichen, daß sich die stehenbleibenden Kunststoffbereiche aufgrund ihrer Elastizität der unterschiedlichen Dehnung der angrenzenden Metallteile anpassen, ohne daß es lokal zu überhöhten Spannungen kommt. Daneben sind derartige Aussparungen bzw. Nuten in den Umfangsflächen der Distanzelemente auch geeignet, die Einpreßkräfte trotz eines vorbestimmten radialen Passungsübermaßes gering zu halten.

Ausführungsbeispiele der Erfindung, an denen weitere Einzelheiten und Vorteile der Erfindung verdeutlicht werden, werden im folgenden anhand der Zeichnung näher beschrieben. Dabei zeigt:

FIG 1 und FIG 2 je eine Front- bzw. Seitenansicht einer Lageranordnung für einen Drehpositionierer,

FIG 3 eine Prinzipskizze einer derartigen Lageranordnung in einem Querschnitt, der die Anordnung von Distanzelementen zwischen einer Achse mit darauf angeordneten Kugellagern und einem drehbeweglich gelagerten Lagerelement funktionell verdeutlicht,

FIG 4 in einer dreidimensionalen Darstellung den Prinzipaufbau eines Distanzelementes mit einer Mehrzahl von durch Schlitze voneinander getrennten, jedoch mäanderförmig aneinanderhängenden Teilstücken,

FIG 5 in einer weiteren dreidimensionalen Darstellung eine weitere Ausführungsform für ein Distanzelement mit einer Mehrzahl von auf seiner äußeren Umfangsfläche in regelmäßigen Abständen angeordneten, axial verlaufenden Nuten,

FIG 6 bzw. 7 je eine Prinzipskizze für weitere Ausgestaltungen der Distanzelemente mit einer Mehrzahl von Aussparungen, die in seine Oberflächen eingelassen sind, um die Berührungsflächen zu den angrenzenden Metallteilen zu reduzieren und

FIG 8 eine weitere Ausführungsform in einer Anwendung auf die Lagerung der Spindel eines Plattenstapels eines Magnetplattenspeichers.

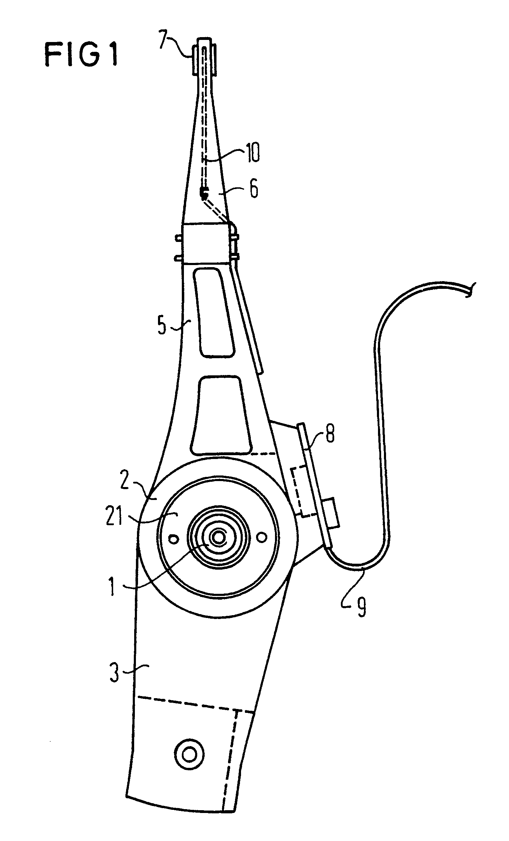

Die in FIG 1 dargestellte Frontansicht eines Drehpositionierers für einen Magnetplattenspeicher zeigt den Drehpositionierer komplett bestückt. Auf einer Achse 1 ist ein Schwenkstück 2 verschwenkbar angeordnet, das aus einem konzentrisch zur Achse 1 angeordneten, als Hohlzylinder ausgebildeten Grundkörper besteht. Von diesem Grundkörper stehen in radialer Richtung, nach unten gerichtet, Haltearme 3 als Aufnahmen für eine Magnetantriebsspule 4 und nach oben gerichtet eine Mehrzahl von Tragarmen 5 ab. Diese Tragarme 5 tragen an ihren äußeren Enden flexible Kopfplatten 6, an deren freien Enden Magnetköpfe 7 festgelegt sind. Seitlich ist an dem Grundkörper des Schwenkstückes 2 eine Leiterplattenbaugruppe 8 befestigt, die, wie schematisch angedeutet, über eine flexible Anschlußleitung 9 mit der übrigen, hier nicht dargestellten Elektronik des Magnetplattenspeichers verbunden ist. Die Leiterplattenbaugruppe 8 enthält die Verstärkerelektronik, die über Einzelleitungen 10 unmittelbar an die Magnetköpfe 7 angeschlossen ist.

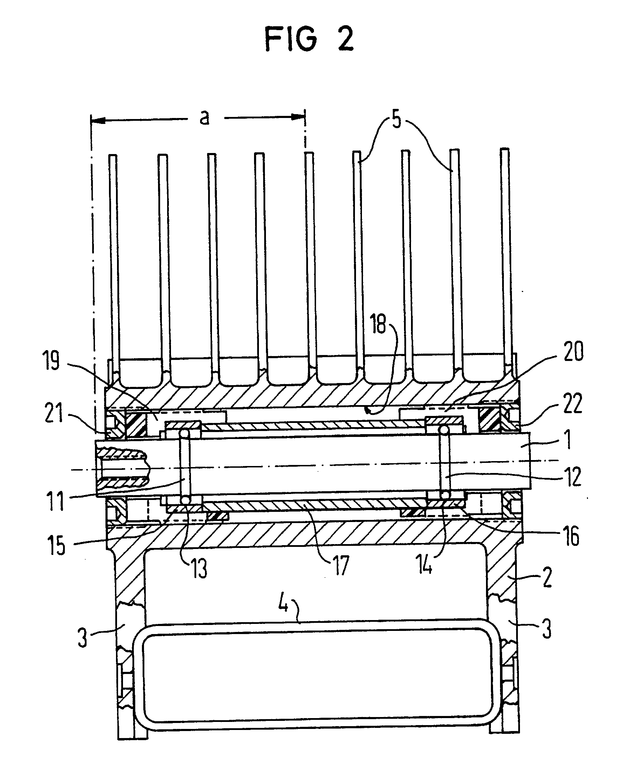

In FIG 2 ist eine Seitenansicht des Drehpositionierers dargestellt. Da in diesem Fall insbesondere die Lagerung des Schwenkstückes 2 auf der Achse 1 von Interesse ist, sind bei dem Teilschnitt von FIG 2 aus Gründen der Übersichtlichkeit alle dafür unwesentlichen Einzelheiten weggelassen.

In den Umfang der Achse 1 sind mit einem vorgegebenen Abstand Laufrillen 11, 12 eingeschliffen. In diesen sind Kugelsätze 13 bzw. 14 geführt, die Außenringe 15 bzw. 16 der Kugellager tragen. Der axiale Abstand der Kugellageraußenringe 15 bzw. 16 ist durch eine Abstandshülse 17 festgelegt, die mit ausreichendem Spiel über die Achse 1 geschoben ist.

Diese Baueinheit, bestehend aus der Achse 1, den beiden Kugellagern 13, 15 bzw. 14, 16 und der Abstandshülse 17, ist in einer Bohrung 18 des Schwenkstückes 2 über Distanzelemente 19 bzw. 20 zentrisch und über einen leichten Preßsitz radial spielfrei gehalten. In axialer Richtung ist die Achse 1 der beschriebenen Baueinheit durch Ringschrauben 21 bzw. 22 fest gelegt, die in Innengewinden an den stirnseitigen Enden der Bohrung 18 geführt sind. Durch ein Montagebezugsmaß a ist angedeutet, daß eine Stirnfläche der Achse 1 durch entsprechendes Verstellen der Ringschrauben 21 bzw. 22 in einer definierten Lage bezüglich eines der Tragarme 5 eingestellt und spielfrei fixiert wird. Dieser ausgewählte Tragarm ist vorzugsweise derjenige, welcher einen Servomagnetkopf des Drehpositionierers trägt.

Der beschriebenen Lagergestaltung liegt als Ausgangspunkt zugrunde, daß die drehbeweglichen Teile, insbesondere das Schwenkstück 2 hier aus Gründen der Massereduzierung beispielsweise aus einer Aluminiumlegierung hergestellt ist, während die eigentliche Lagereinheit mit der starren Achse 1, den Kugellagern 13, 15 bzw. 14, 16 und der Abstandshülse 17 konventionell aus Stahllegierungen gefertigt sind, die hohe Flächenpressungen erlaubt. Im praktischen Betrieb des Drehpositionierers in einem Magnetplattenspeicher müssen aber Temperaturänderungen zugestanden werden. Daraus ergibt sich bei dieser Materialpaarung mit unterschiedlichen Wärmeausdehnungskoeffizienten, daß Spannungen zwischen der Lagerung und dem Schwenkstück 2 sowohl in axialer als auch in radialer Richtung unvermeidbar sind, wenn die Außenringe 15, 16 der Kugellager direkt spielfrei in die Bohrung 18 des Schwenkstückes eingesetzt sind. Diese Wärmespannungen können sich so auswirken, daß sich die Position der Tragarme 5 zueinander verändert, was dann bei den heute erreichbaren hohen Speicherdichten zu Funktionsfehlern des Magnetplattenspeichers führen kann.

Die durch die Distanzelemente 19 bzw. 20 erreichte räumliche Trennung der Lagereinheit, bestehend aus der Achse 1, den Kugellagern 13, 15 bzw. 14, 16 und der Abstandshülse 17, von dem Schwenkstück 2 eliminiert derartige Fehlerursachen in erheblichem Umfang. Dies gilt unter der Voraussetzung, daß die Distanzelemente 19, 20 aus einem Werkstoff mit einem hohen Ausdehnungskoeffizienten gefertigt sind, beispielsweise aus Polycarbonat, das einen Ausdehnungskoeffizienten von $65 \times 10^{-6}$ aufweist.

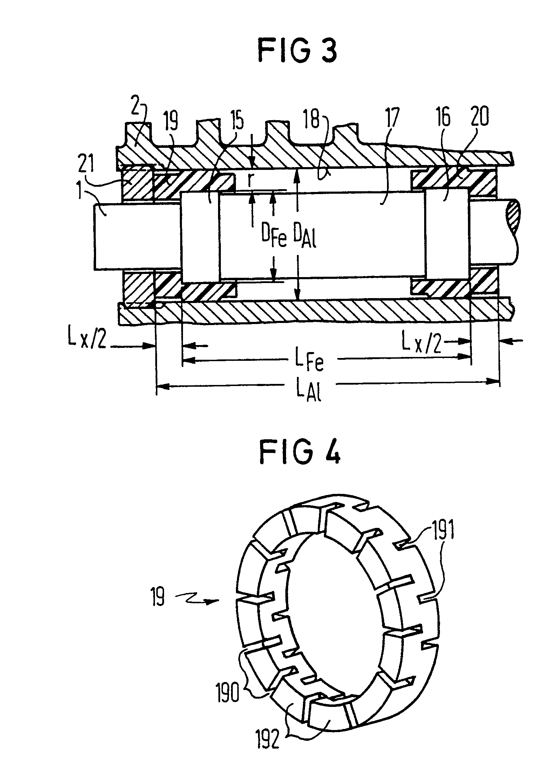

Zur besseren Erläuterung des Funktionsprinzips ist in FIG 3 nochmals ein Schnitt durch die anhand von FIG 2 beschriebene Lagergestaltung dargestellt. Anhand dieser Prinzipskizze soll im folgenden erläutert werden, daß bei der Dimensionierung der Distanzelemente 19, 20 zweckmäßig bestimmte Bedingungen eingehalten werden, damit sie ihre Funktion als Ausgleichselemente für die unterschiedlichen Volumenausdehnungen bei Temperaturveränderungen des Schwenkstückes 2 und der Lagereinheit erfüllen.

Die funktionell bestimmenden Abmessungen des Schwenkstückes 2 sind einerseits der Durchmesser $D_{Al}$ der Schwenkstückbohrung 18 sowie der Abstand zwischen den äußeren Stirnkanten der Distanzelemente 19 bzw. 20, der die funktionsbestimmende Länge $L_{Al}$ des Schwenkstückes 2 repräsentiert. In entsprechender Weise sind dies bei der Lagereinheit der Außendurchmesser $D_{Fe}$ der Kugellageraußenringe 15 bzw. 16 sowie der Abstand $L_{Fe}$ der nach außen weisenden Stirnseiten der Außenringe 15 bzw. 16. Die funktionell wirksame Länge der Distanzelemente 19 bzw. 20 ist in FIG 3 mit $L_{x/2}$ bezeichnet. Diese Länge entspricht dem Abstand zwischen der nach außen gerichteten Stirnseite eines der Außenringe 15 bzw. 16 der Kugellager zu der innenliegenden Stirnseite der zugeordneten Ringschraube 21 bzw. 22. In radialer Richtung ist der Abstand zwischen einem der Außenringe 15 bzw. 16 der Kugellager und der Wandung der Bohrung 18 des Schwenkstückes 2, in FIG 3 mit r bezeichnet, die funktionsbestimmende Größe für die Distanzelemente 19 bzw. 20. Bezeichnet man weiterhin die Ausdehnungskoeffizienten für das Schwenkstück 2 mit $\alpha_{Al}$ (beispielsweise $23,6 \times 10^{-6}$), für die Lagereinheit mit $\alpha_{Fe}$ (beispielsweise $11 \times 10^{-6}$) und für die Distanzelemente 19 bzw. 20 mit $\alpha_x$, dann kann man die Bedingung, daß die Distanzelemente 19, 20 die unterschiedlichen Längenänderungen der Materialpaarung auffangen sollen, durch eine Beziehung (1) ausdrücken:

(1)  $L_{Al}\, \alpha_{Al} = L_{Fe}\alpha_{Fe} + L_x\, \alpha_x$

Da voraussetzungsgemäß die Längenänderung beider Distanzelemente 19 und 20 für einen axialen Ausgleich der Differenz der Längenänderung $L_{Al}$ des Schwenkstückes 2 und der Längenänderung $L_{Fe}$ der Lagereinheit entsprechen muß, läßt sich die Beziehung (1) umformen in die Beziehung (2):

(2)  $L_{Al}\alpha_{Al} = L_{Fe}\alpha_{Fe} + (L_{Al} - L_{Fe})\alpha_x$

Aus dieser Beziehung läßt sich durch weitere Ableitung bei einer vorgegebenen funktionellen Länge $L_{Al}$ des Schwenkstückes 2 als abgeleitete Größe der Abstand $L_{Fe}$ der Außenringe 15 bzw. 16 der Kugellager gemäß Beziehung (3) angeben:

$$(3) \quad L_{Fe} = L_{Al}\, \frac{(\alpha_x - \alpha_{Al})}{(\alpha_x - \alpha_{Fe})}$$

In ähnlicher Weise läßt sich als Bestimmungsgleichung für die gemeinsame Länge beider Distanzelemente 19 und 20 die Beziehung (4) ableiten:

$$(4) \quad L_x = L_{Al}\left(1 - \frac{\alpha_x - \alpha_{Al}}{\alpha_x - \alpha_{Fe}}\right)$$

Um den radialen Wärmedehnungsausgleich zu erzielen, läßt sich aufgrund analoger Überlegungen für die Ringdicke r, d. h. den Abstand zwischen dem Außendurchmesser der Außenringe 15 bzw. 16 der Kugellager und der Wandung der Bohrung 18 des Schwenkstückes 2 die Beziehung (5) angeben:

$$(5) \quad 2\,r = D_{Al}\left(1 - \frac{\alpha_x - \alpha_{Al}}{\alpha_x - \alpha_{Fe}}\right)$$

Werden unter Beachtung dieser in den Beziehungen (1) bis (5) ausgerückten Randbedingungen die spezifischen Größen gewählt, dann läßt sich eine Lagergestaltung erreichen, die bei allen Temperaturänderungen einerseits Wärmespannungen vermeidet, andererseits aber kein unzulässiges Spiel in der Lagerpaarungen hervorruft.

Um die zentrierende Funktion zu erfüllen, bräuchte man an sich lediglich drei in Umfangsrichtung symmetrisch angeordnete Teilelemente und keinen Distanzring. Da dies keine montagefreundliche Lösung darstellt, werden die Distanzelemente 19 bzw. 20 als Ringkörper ausgebildet. Dabei ergeben sich relativ großflächige Berührungsbereiche der Distanzelemente, in denen sie an Metallteilen mit unterschiedlichen Materialeigenschaften anliegen. In diesen Berührungsbereichen treten bei Temperaturveränderungen unterschiedliche Wärmedehnungen auf. Diese unterschiedlichen Wärmedehnungen in den Berührungsbereichen führen immer noch zu lokalen Spannungen und gegebenenfalls zu Relativbewegungen zwischen dem Distanzelement und dem anliegenden Metallteil. Diese Einflüsse unterschiedlicher Wärmedehnung ändern zwar nichts an der Zentrierung der aus der Achse 1 und den Kugellagern 13, 15 bzw. 14, 16 gebildeten Lagereinheit in dem Schwenkstück 2, sind aber dennoch nicht befriedigend.

Die in FIG 4 dargestellte Prinzipskizze für eine abgewandelte Ausführungsform der Distanzelemente 19 bzw. 20 illustriert den Grundgedanken für eine Lösung, die für dieses Problem eine Abhilfe schafft. Aus dem geschlossenen Ringkörper des Distanzelementes 19 wird ein in sich elastisch verformbares Gebilde dadurch, daß der Ringkörper von beiden Stirnflächen her mit radial verlaufenden Schlitzen 190 bzw. 191 versehen wird. Die Schlitze 190 in der einen Stirnfläche sind vorzusweise gegenüber den Schlitzen 191 in der anderen Stirnfläche symmetrisch versetzt angeordnet. Erhalten wird damit ein in sich zusammenhängendes ringförmiges Gebilde, das aus einer Mehrzahl von sektorförmigen Teilstücken 192 zusammengesetzt ist. Ein derart ausgebildetes Distanzelement läßt sich, da es in sich zusammenhängt, ebenso einfach wie ein geschlossener Ring montieren, kann aber wegen seiner erhöhten Flexibilität leichter örtliche Wärmespannungen ausgleichen. Aus Gründen der Übersichtlichkeit ist das Dichtungselement in FIG 4 schematisiert als ein einfacher Ringkörper dargestellt. Das anhand dieser Darstellung erläuterte Prinzip läßt sich jedoch ohne weiteres auch auf Distanzelemente 19 bzw. 20 einer Querschnittsfläche anwenden, wie sie beispielsweise in FIG 3 gezeigt ist.

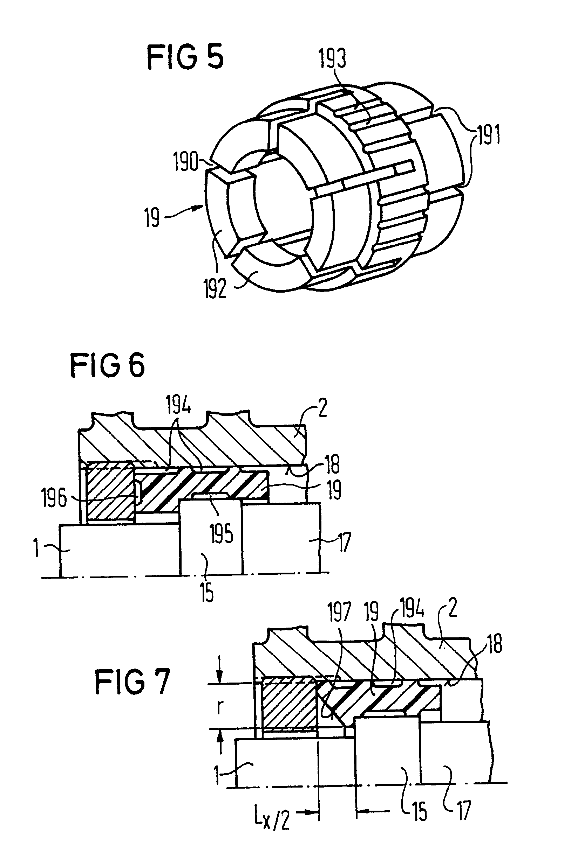

In FIG 5 ist in dreidimensionaler Darstellung eine mögliche Ausführungsform eines Distanzelementes 19 gezeigt. Diese Ausführungsform zeigt neben den radialen Schlitzen 190 bzw. 191 noch ein weiteres Merkmal. In die äußere Umfangsfläche, die nach der Montage des Dichtungselementes an der Innenwandung der Gehäusebohrung 18 anliegt, sind in axialer Richtung verlaufend, eine Vielzahl von Nuten 193 eingepreßt. Diese Nuten 193 haben den Zweck, die Berührungsfläche zwischen dem Schwenkstück 2 und dem Distanzelement 19 weiter in kleine Teilbereiche zu unterteilen und sie in einem gewissen Umfang zu reduzieren, ohne die Zentrierungsfunktion des Distanzelementes 19 zu beeinträchtigen.

In FIG 6 ist eine weitere Ausführungsform für die Ausgestaltung der Distanzelemente 19 bzw. 20 in einem Halbschnitt dargestellt, bei der die Berührungsflächen zwischen dem Distanzelement 19 und der Wandung der Bohrung 18, der Umfangsfläche der Außenringe 15 der Kugellager und den Ringschrauben 21 durch Aussparungen 194 bis 196 verringert ist. Dabei verlaufen die Aussparungen 194 und 195 in axialer Richtung in der Umfangs-bzw. Innenfläche des Distanzelementes 19, um die Anlageflächen an die Wandung der Bohrung 18 des Schwenkstückes 2 bzw. an die Außenringe 15 der Kugellager zu reduzieren. Die Aussparungen 196 sind in radialer Richtung in die Stirnwand des Distanzelementes 19 eingelassen, die an der zugeordneten Ringschraube 21 anliegt.

In FIG 7 ist eine weitere Ausführungsform dargestellt, die insbesondere die Anlagefläche des Distanzelementes 19 an die zugeordnete Ringschraube 21 verringert. Hier ist die in Richtung der Ringschraube 21 weisende Stirnwand 197 des Distanzelementes 19 als Kegelfläche ausgebildet, wobei die Kegelmantellinie die Hypotenuse aus der Ringdicke r und der in bezug auf die Wärmedehnungen wirksamen Länge $L_{x/2}$ des Distanzelementes 19 darstellt.

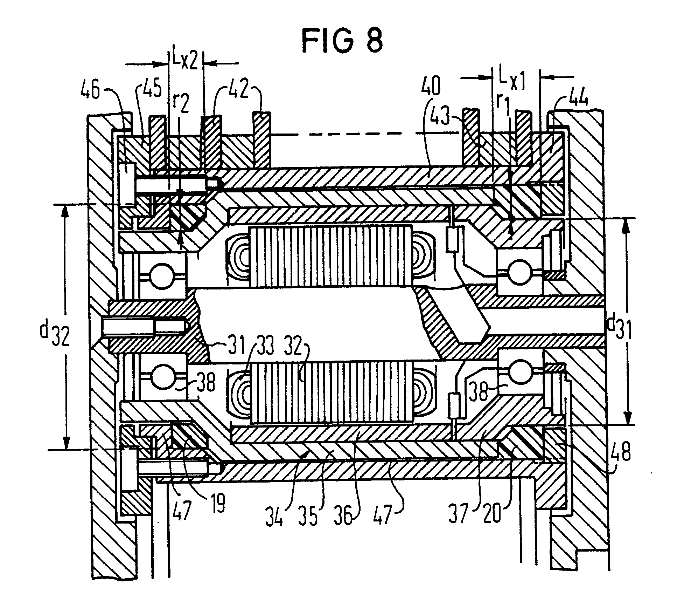

FIG 8 zeigt in einem weiteren Ausführungsbeispiel die Verwen dung der vorstehend geschilderten Prinzipien für eine temperaturunempfindliche spielfreie Lagerung bei der konstruktiven Ausgestaltung einer Motorspindel für einen Magnetplattenspeicher, bei dem der Antriebsmotor in den Innenraum einer die Magnetspeicherplatten tragenden Nabe eingebaut ist. Dieses Aufbauprinzip ist als solches bekannt. Auf einer Achse 31, die in schematisch angedeuteten Gehäusewandungen des Plattenspeichers festgelegt ist, ist ein Stator 32 des Antriebsmotors mit seiner Motorwicklung 33 angeordnet. Der zugehörige Rotor 34 des Antriebsmotors wird durch eine Hülse 35 gebildet, auf deren Innenfläche Permanentmagnete 36 festgelegt sind. Nach einer Seite ist die Hülse verjüngt ausgebildet, auf der anderen Seite nimmt sie einen eingepreßten Flansch 37 auf. Diese Rotoranordnung 34, bestehend aus der Hülse 35, dem Permanentmagneten 36 und dem Flansch 37, ist auf der Achse 31 mittels zweier Kugellager 38 und 39 beidseitig und spielfrei gelagert und bildet so eine in sich formstabile Baueinheit.

Diese Rotoranordnung 34 ist mit ihrer Hülse 35 von einer Nabe 40 umschlossen. Wie noch zu erläutern sein wird, ist die Rotoranordnung 34 mit der Hülse 35 innerhalb dieser Nabe 40 zentrisch derart angeordnet, daß sich zwischen der Hülse 35 und der Innenwandung der Nabe 40 ein zylindrischer Spalt 41 ergibt. Auf der Nabe 40 ist eine Mehrzahl von Magnetspeicherplatten 42 angeordnet, die durch Distanzringe 43 untereinander in einem definierten Abstand gehalten werden. Eines der beiden Nabenenden weist einen überstehenden Flansch 44 auf, gegen den der Stapel der Magnetspeicherplatten 42 mit den zwischengelegten Distanzringen 43 durch einen Druckring 45 gedrückt wird, der auf der dem Nabenflansch 44 gegenüberliegenden Seite angeordnet ist. Die Druckkraft auf den Magnetplattenstapel wird durch Spannschrauben 46 hervorgerufen, die in axialer Richtung durch Bohrungen des Druckringes hindurch in die Nabe 40 eingeschraubt sind.

Der Plattenstapel bildet mit der Nabe 40, den aufgeschobenen Magnetspeicherplatten 42, den Distanzringen 43 und dem Druck ring 45 eine weitere Baueinheit der Lageranordnung und besteht im wesentlichen aus Aluminiumteilen. Dagegen ist die andere Baueinheit, die beschriebene Antriebsanordnung 34, die innerhalb der Hülse 35 angeordnet ist, mit Ausnahme der Kupferwicklung des Stators 32 aus Stahlteilen aufgebaut. Damit ergibt sich wieder das Problem, daß bei Temperaturänderungen im Betriebszustand aufgrund der unterschiedlichen Ausdehnungskoeffizienten unterschiedliche Wärmedehnungen zwischen dem Plattenstapel einerseits und der Motoranordnung andererseits auftreten. Um Wärmespannungen zu vermeiden, sind deshalb auch hier wieder Distanzelemente 19 bzw. 20, den beiden Lagerstellen zugeordnet, vorgesehen. Wieder bestehen diese Distanzelemente 18 bzw. 19 aus einem Werkstoff mit großem Ausdehnungskoeffizienten. Sie füllen den Zwischenraum zwischen der Innenwandung der Nabe 40 und der Oberfläche der Hülse 35 mit dem eingepreßten Flansch 37 aus. Die axiale Festlegung der Nabe 40 auf der Hülse 35 ergibt sich daraus, daß die Nabe 40 einseitig einen nach innen vorstehenden Bund 47 aufweist, der axial gegen das eine Distanzelement 19 drückt und auf der gegenüberliegenden Seite in die Nabe eine Ringschraube 48 eingeschraubt ist, die gegen das andere Distanzelement 20 drückt.

Durch diese Anordnung der Distanzelemente 18 und 19 werden die Nabe 40 und die Antriebsanordnung 34 konzentrisch zueinander gehalten, wobei der zylindrische Axialspalt 37 gebildet wird. Für die Distanzelemente 19 und 20 sind Ringdicken r1 bzw. r2 angegeben, die entsprechend der Beziehung (5) in Abhängigkeit von den jeweiligen Ausdehnungskoeffizienten und den hier angegebenen Durchmessern d31 bzw. d32, d. h. die funktionell wesentlichen Durchmesser für die Stahl- bzw. die Aluminiumteile zu dimensionieren sind. In radialer Richtung dienen die Distanzelemente 19 bzw. 20 aufgrund dieser Ringdikken $r_1$ bzw. $r_2$ dem radialen Wärmedehnungsausgleich zwischen der Antriebsanordnung 34 und der Nabe 40.

Für die Längen der Distanzelemente 19 und 20 in axialer Richtung sind die Längen $L_{x1}$ bzw. $L_{x2}$ angegeben, die sich aufgrund der oben beschriebenen Beziehungen (3) bzw. (4) errechnen lassen. Die axiale Ausdehnung der Distanzelemente 18 bzw. 19 dient damit dem axialen Wärmedehnungsausgleich zwischen der Nabe 40 und der Antriebsanordnung 4.

Auch für diesen Anwendungsfall gelten mögliche Weiterbildungen, d. h. Ausgestaltungen der äußeren Form der Distanzelemente 19 bzw. 20, die anhand der FIG 4 bis 7 bereits erläutert wurden mit analogen Möglichkeiten für einen wirksamen Ausgleich der unterschiedlichen Wärmedehnungen der Nabenanordnung einerseits und der Antriebsanordnung andererseits, so daß hier auf eine weitere Schilderung von Details verzichtet werden kann.

Die vorstehend beschriebenen Ausführungsbeispiele zeigen, daß im Rahmen der Erfindung eine Vielzahl von konstruktiven Ausgestaltungen für die Distanzelemente möglich sind. Gemeinsam ist all diesen Ausführungsformen das Ziel, die Distanzelemente in sich möglichst flexibel zu halten, die Anlageflächen zu reduzieren, so daß sich lokale Wärmespannungen nur in begrenztem Umfang aufbauen können, wobei die Distanzelemente dennoch in sich geschlossen bleiben und damit auch bei einfacher Montagemöglichkeit ihre zentrierende Funktion voll erfüllen können.

## Ansprüche

1. Anordnung zum spielfreien Lagern einer drehbeweglichen Baueinheit (z. B. 2) mit ersten Materialeigenschaften in bzw. auf einer weiteren Baueinheit (z. B. 1) mit zweiten Materialeigenschaften unter Verwendung von mindestens einem Wälzlager (11, 13, 15 bzw. 12, 14, 16) sowie Mitteln (19, 20) zum Ausgleichen von Temperaturtoleranzen, so daß Spielfreiheit der Lageranordnung in einem vorgegebenen Temperaturbereich gewährleistet ist, **dadurch gekennzeichnet,** daß das Wälzlager (15 bzw. 16) in der einen Baueinheit (1) festgelegt ist, deren Wärmeausdehnungskoeffizient dem des Wälzlagers mindestens nahe kommt und daß zwischen dem Wälzlager und der anderen Baueinheit (2) mindestens ein die beiden Baueinheiten spielfrei zueinander zentrierendes Distanzelement (19 bzw. 20) mit einer dritten Materialeigenschaft angeordnet ist, die derart gewählt ist, daß eine hohe Wärmedehnung des Distanzelementes unterschiedliche Wärmedehnungen der beiden Baueinheiten in axialer und/oder radialer Richtung kompensiert.

2. Lageranordnung nach Anspruch 1, wobei die drehbewegliche Baueinheit (2) auf einer Achse (1) der anderen Baueinheit zweifach gelagert ist, **dadurch gekennzeichnet,** daß beide Lagerstellen als Festlager (11, 13, 15 bzw. 12, 14, 16) ausgebildet und in einem vorgegebenen Abstand voneinander angeordnet sind, daß Mittel (21, 22) zum axialen Festlegen der Baueinheiten (1 bzw. 2) relativ zueinander vorgesehen sind, wobei der gegenseitige Abstand dieser Mittel größer ist als der der Lagerstellen untereinander und daß jeder Lagerstelle ein Distanzelement (19 bzw. 20) zugeordnet ist, wobei mindestens eines der Distanzelemente die axiale Abstandsdifferenz zwischen den Lagerstellen und den Mitteln zum axialen Festlegen der Baueinheiten ausfüllt.

3. Lageranordnung nach Anspruch 2, **dadurch gekennzeichnet,** daß die Mittel zum axialen Festlegen der Baueinheiten als Ringschrauben (21, 22) ausgebildet sind und daß die außen liegende Baueinheit (2) eine Lagerbohrung (18) aufweist, deren stirnseitigen Enden mit einem Innengewinde zum Aufnehmen der Ringschrauben versehen sind.

4. Lageranordnung nach einem der Ansprüche 1 bis 3, **dadurch gekennzeichnet,** daß die Distanzelemente (19 bzw. 20) als Lagerbuchsen ausgebildet sind, die einen stirnseitigen, radial vorstehenden Bund aufweisen, der einen Außenring (15 bzw. 16) der zugeordneten Lagerstelle (11, 13, 15 bzw. 12, 14, 16) umgreift.

5. Lageranordnung nach einem der Ansprüche 1 bis 4, **dadurch gekennzeichnet,** daß jedes Distanzelement (19) als Zentrierring ausgebildet ist, in dessen Stirnseiten jeweils eine Mehrzahl von in radialer Richtung verlaufenden, auf dem Umfang regelmäßig angeordneten Schlitzen (190 bzw. 191) eingelassen ist.

6. Lageranordnung nach Anspruch 5, **dadurch gekennzeichnet,** daß die Radialschlitze (190) in der einen Stirnseite des Distanzelementes (19) gegenüber den Radialschlitzen (191) in der anderen Stirnseite in Umfangsrichtung symmetrisch versetzt angeordnet sind, so daß das Distanzelement aus einer Mehrzahl von Kreisringabschnitte bildenden, mäanderförmig aneinanderhängenden Teilstücken (192) zusammengesetzt ist.

7. Lageranordnung nach einem der Ansprüche 1 bis 6, **dadurch gekennzeichnet,** daß jedes Distanzelement (19 bzw. 20) in mindestens einer seiner Umfangsflächen in axialer Richtung verlaufende, auf dem Umfang regelmäßig verteilt angeordnete, durchgehende flache Nuten (193) aufweist.

8. Lageranordnung nach einem der Ansprüche 1 bis 6, **dadurch gekennzeichnet,** daß jedes Distanzelement (19 bzw. 20) in mindestens einer seiner Umfangsflächen regelmäßig verteilt angeordnete flächige Ausnehmungen (194 bzw. 195) aufweist.

9. Lageranordnung nach einem der Ansprüche 4 bis 8, **dadurch gekennzeichnet,** daß in die Stirnseite des Bundes des Distanzelementes (19 bzw. 20) in Umfangsrichtung regelmäßig verteilt angeordnete Ausnehmungen (196) eingelassen sind.

10. Lageranordnung nach einem der Ansprüche 4 bis 8, **dadurch gekennzeichnet,** daß die Stirnseite des Bundes des Distanzelementes (19) als zurückspringende Kegelfläche (197) ausgebildet ist.

11. Lageranordnung nach einem der Ansprüche 1 bis 10, **gekennzeichnet durch** ihre Verwendung bei einem Drehpositionierer für einen Magnetplattenspeicher, bei dem die drehbewegliche Baueinheit ein Schwenkstück (2) bildet, das radial abstehend einerseits eine Mehrzahl von Tragarmen (5) zum Befestigen von Magnetköpfen (7) und andererseits Haltearme (3) zum Tragen einer Magnetantriebsspule (4) aufweist und die andere Baueinheit eine starre Achse (1) ist, um die sich das Schwenkstücke (2), angetrieben durch die entsprechend erregte Magnetantriebsspule (4), oszillierend bewegt.

12. Lageranordnung nach Anspruch 11, **dadurch gekennzeichnet,** daß die Achse (1) in vorbestimmtem Abstand voneinander ein Paar von radial umlaufenden Laufrillen (11 und 12) als Führungsflächen für Kugelsätze (13 bzw. 14) aufweist, denen je ein Außenring (15 bzw. 16) des Kugellagers zugeordnet ist und daß zwischen den Außenringen eine Abstandshülse (17) zum Erzeugen einer Lagervorspannung angeordnet ist, die mit Spiel über die Achse (1) geschoben ist.

13. Lageranordnung nach Anspruch 11 oder 12, **dadurch gekennzeichnet,** daß das Schwenkstück (2) zur Massenreduzierung aus einer Leichtmetallegierung hergestellt ist, während die Achse (1) sowie die darauf angeordneten Festlager (11, 13, 15 bzw. 12, 14, 16) aus Stahllegierungen hergestellt sind und daß die Distanzelemente (19, 20) aus einem Kunststoff bestehen, dessen Ausdehnungskoeffizient wesentlich größer als der der Leichtmetallegierung ist.

14. Lageranordnung nach Anspruch 13, **gekennzeichnet durch** ein Schwenkstück (2) hergestellt au einer Aluminiumlegierung und durch Distanzelemente (19, 20) hergestellt aus einem Polycarbonat.

15. Lageranordnung nach einem der Ansprüche 1 bis 10, **gekennzeichnet durch** ihre Verwendung bei einer Lagerung einer Plattenstapelspindel eines Magnetplattenspeichers mit einer als Innenmotor ausgebildeten Antriebsanordnung (31 bis 39), die die eine Baueinheit bildet und der mit einem vorgegebenen radialen Abstand (41) eine Nabenanordnung (40, 42 bis 46) mit Magnetspeicherplatten (42) koaxial zugeordnet ist, die die andere Baueinheit bildet und wobei die beiden Baueinheiten durch ein Paar von Distanzelementen (19, 20) zueinander zentriert sind, die an stirnseitigen Enden der Antriebsanordnung festgelegt sind.

16. Lageranordnung nach Anspruch 15, **dadurch gekennzeichnet,** daß die Antriebsanordnung (31 bis 39) eine im Gehäuse des Magnetplattenspeichers feststehend angeordnete Achse (31) aufweist, auf der ein Stator (32) mit einer Motorwicklung (33) sowie ein Paar von Wälzlagern (38, 39) an beiden Achsstummeln festgelegt sind und außerdem eine Hülse (35) umfaßt, die von den Wälzlagern getragen ist und dem Stator · zugeordnet Permanentmagnete (36) aufnimmt.

17. Lageranordnung nach Anspruch 15 oder 16, **dadurch gekennzeichnet,** daß die eine der Baueinheiten bildende Nabenanordnung (40, 42 bis 46) eine Nabe (40) aufweist, die auf ihrer Umfangsfläche die Magnetspeicherplatten (42) trägt, zwischen denen je ein Distanzring (43) angeordnet ist und die auf der Nabe verspannt festgelegt sind.

18. Lageranordnung nach Anspruch 17, **dadurch ge kennzeichnet,** daß die Distanzelemente (19 bzw. 20) axial einerseits durch radiale Ansätze am Umfang der Stirnfläche der Antriebsanordnung (31 bis 39) in vorbestimmtem Abstand festgelegt sind und daß die Nabenanordnung (40, 42 bis 48) Befestigungsmittel (47, 48) aufweist, die an den außenliegenden Stirnseiten der Distanzelemente angreifen.

19. Lageranordnung nach Anspruch 18, **dadurch gekennzeichnet,** daß die Befestigungsmittel als ein radial nach innen vorstehender Bund (47) einer Stirnfläche der Nabenanordnung sowie als eine Ringschraube (49) ausgebildet sind, die in der anderen Stirnfläche in die Nabenanordnung (40, 42 bis 48) eingeschraubt ist.

**FIG 1**

# FIG 2

# FIG 3

# FIG 4

FIG 5

FIG 6

FIG 7

# FIG 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 10, no. 210 (P-479)(2266) 23 Juli 1986, & JP-A-61 48179 (FUJITSU) 8 März 1986, * das ganze Dokument * | 1 | G11B5/48 |
| A | | 2, 4, 11, 12 | |
| X | PATENT ABSTRACTS OF JAPAN vol. 10, no. 111 (P-451)(2168) 25 April 1986, & JP-A-60 242552 (FUJITSU) 2 Dezember 1985, * das ganze Dokument * | 1, 15 | |
| A | | 16-17 | |
| X | US-A-3864747 (I.PEJCHA) * Spalte 1, Zeilen 60 - 68 * * Spalte 2, Zeilen 51 - 54 * * Spalte 4, Zeilen 53 - 61 * * Spalte 5, Zeilen 18 - 32 * * Spalte 6, Zeilen 1 - 13; Figuren 1-5 * | 1 | |
| A | | 2, 4, 11 | **RECHERCHIERTE SACHGEBIETE (Int. Cl.5 )** |
| X | PATENT ABSTRACTS OF JAPAN vol. 10, no. 278 (P-499)(2334) 20 September 1986, & JP-A-61 99977 (NEC) 19 Mai 1986, * das ganze Dokument * | 1 | G11B |
| A | | 2, 4, 11 | |
| X | EP-A-157017 (NIXDORF COMPUTER) * Seite 2, Zeile 4 - Seite 3, Zeile 32 * * Seite 5, Zeile 10 - Seite 6, Zeile 10 * * Seite 7, Zeile 24 - Seite 8, Zeile 2; Ansprüche 1-4, 9; Figuren 1-5 * | 1, 11 | |
| A | | 2-5, 12-13 | |
| A | PATENT ABSTRACTS OF JAPAN vol. 12, no. 74 (P-674)(2921) 9 März 1988, & JP-A-62 212968 (FUJITSU) 18 September 1987, * das ganze Dokument * | 1, 15-17 | |

Der vorliegende Recherchenbericht wurde für alle Patentansprüche erstellt

| Recherchenort | Abschlußdatum der Recherche | Prüfer |
|---|---|---|
| DEN HAAG | 31 OKTOBER 1989 | CALARASANU |

| Europäisches | |
| --- | --- |
| Patentamt | **EUROPÄISCHER RECHERCHENBERICHT** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| --- | --- | --- | --- |
| | ----- | | |

**RECHERCHIERTE SACHGEBIETE (Int. Cl.5 )**

Der vorliegende Recherchenbericht wurde für alle Patentansprüche erstellt

| Recherchenort | Abschlußdatum der Recherche | Prüfer |
| --- | --- | --- |
| DEN HAAG | 31 OKTOBER 1989 | CALARASANU |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
   Dokument

EPO FORM 1503 03.82 (P0403)